# EUROPÄISCHE PATENTSCHRIFT

(11) **EP 3 614 130 B1**
(45) Veröffentlichungstag und Bekanntmachung des Hinweises auf die Patenterteilung: **24.11.2021**
(21) Anmeldenummer: 18190320.4
(22) Anmeldetag: 22.08.2018
(51) Int. Cl.: G01N 21/64, G01J 3/02, G01N 21/76, G01J 3/44, G01J 3/10

(54) **VORRICHTUNG ZUR ERMITTLUNG OPTISCHER EIGENSCHAFTEN VON PROBEN**
DEVICE FOR DETERMINING OPTICAL PROPERTIES OF SAMPLES
DISPOSITIF POUR LA DÉTERMINATION DE CARACTÉRISTIQUES OPTIQUES D'ÉCHANTILLONS

(43) Veröffentlichungstag der Anmeldung: 26.02.2020
(73) Patentinhaber: Berthold Technologies GmbH & Co. KG, 75323 Bad Wildbad (DE)
(72) Erfinder: BERTHOLD, Fritz, 75173 Pforzheim (DE); WULF, Jürgen, 88699 Frickingen (DE)
(74) Vertreter: Patentanwälte Ruff, Wilhelm, Beier, Dauster & Partner mbB

(56) Entgegenhaltungen:
- WO-A1-99/42884
- WO-A1-2005/010590
- WO-A1-2017/053676
- DE-U1-202008 009 859
- US-A1- 2003 030 850
- US-A1- 2007 183 931

## Beschreibung

Die Erfindung betrifft eine Vorrichtung zur Ermittlung optischer Eigenschaften von Proben, die in einer Matrixanordnung in Näpfchen einer Mikrotiterplatte angeordnet sind, gemäß dem Oberbegriff von Anspruch 1.

Verfahren der Fluoreszenzspektroskopie gehören zu den wichtigsten Untersuchungsmethoden in der biochemischen und pharmakologischen Forschung. Zur Messwerterfassung werden Vorrichtungen zur Ermittlung von optischen Eigenschaften von Proben eingesetzt. Diese können z.B. als reine Fluorometer ausschließlich für Fluoreszenzmessungen ausgelegt sein oder als Multi-Technologie-Geräte, z.B. sogenannte Multi-Label-Reader (MLR) oder MultiMode-Reader, die zusätzlich zu Fluoreszenzmessungen auch andere Messmethoden ermöglichen, z.B. Lumineszenzmessungen, Absorptionsmessungen etc.

Zur Durchführung der Untersuchungsmethoden werden häufig Probenmultiplex-Verfahren angewandt, bei denen die zu untersuchenden Proben in einer Matrixanordnung in Näpfchen (wells) einer Mikrotiterplatte (microwell plate) angeordnet sind und entweder sequentiell oder parallelisiert mit unterschiedlichen, zumeist kontaktfreien optischen Analysemethoden untersucht werden. Die Art der untersuchten Proben ist hierbei äußerst vielfältig. Sie kann bei biologischen proben z.B. von homogenen Lösungen bis zu immobilisierten Zellen reichen.

Bei der Messung der Fluoreszenz wird die Probe mit Licht (Anregungslicht, Excitationslicht) mit definierten Eigenschaften (z.B. mit einer bestimmten Anregungswellenlänge) beaufschlagt und dadurch Fluoreszenzlicht erzeugt. Das aus der Probe emittierte Fluoreszenzlicht, welches gegenüber dem Anregungslicht normalerweise zu längeren Wellenlängen (niedrigeren Energien) verschoben ist und häufig auch als Emissionslicht bezeichnet wird, wird in einem Detektionspfad (auch Emissionspfad genannt) einem photosensitiven Detektor zugeleitet und die resultierenden Intensitäten gemessen. Bei Fluoreszenzproben ist es üblich, das Anregungslicht von oberhalb der Probenebene in die Messposition einzustrahlen und das Emissionslicht an der Lichteintrittsseite des Anregungslichts von der Probenoberfläche kommend zu sammeln und, ggf. nach Durchlaufen einer spektralen Filterung, z.B. durch optische Filter oder Monochromatoren hindurch, zum photoempfindlichen Detektor zu führen. Eine derartige Erfassung von Emissionslicht von der Oberseite der Probe bzw. des Probenbehälters wird hier als "Messung von oben" oder "Top-Messung" bezeichnet. Unter anderem bei Zellmessungen kann es sinnvoll sein, Probenbehälter mit einem transparenten Boden zu verwenden und das Emissionslicht der sich am Boden des Probenbehälters befindlichen Zellen durch den Behälterboden hindurch aufzunehmen und von der Unterseite der Probe, ggf. über ein wellenlängenselektives Element, z.B. Bandpassfilter, zu dem Detektor zu führen. Eine derartige Erfassung von Emissionslicht von der Unterseite der Probe bzw. des Probenbehälters wird hier als "Messung von unten" oder "Bottom-Messung" bezeichnet. Die Anregung erfolgt in diesem Fall typischerweise auch von unten. Probenbehälter mit einem transparenten Boden können ggf. auch für Absorptionsmessungen verwendet werden, bei denen das Anregungslicht von oben eingestrahlt wird und mittels eines z.B. unterhalb der Messposition angeordneten Detektors das durch die Probe transmittierte Licht gemessen wird. Zur Steigerung des Informationsgehalts der Ergebnisse solcher Messungen ist es häufig gewünscht, Anregungslicht mit unterschiedlichen Eigenschaften, z.B. aus unterschiedlichen Wellenlängenbereichen, zu verwenden und beim Betrieb der Vorrichtung zwischen den unterschiedlichen Lichtquellen auswählen zu können. Das europäische Patent EP 1 704 403 B1 beschreibt eine Vorrichtung zum Analysieren einer Vielzahl von Proben, die sich an Probenorten auf einem Substrat befinden. Die Vorrichtung hat eine Lichtquellenanordnung mit einer Vielzahl von Lichtquellen, die mit Abstand zueinander angeordnet sind und zur Abstrahlung von Licht aus unterschiedlichen Wellenlängenbereichen ausgebildet sind. Die Lichtquellen sind an einen beweglichen Träger so befestigt, dass eine oder mehrere der Lichtquellen selektiv genutzt werden kann. Die Vorrichtung hat weiterhin einen Rahmen zum Tragen des Substrats, einen Detektor zum Detektieren von Licht sowie ein optisches Relais, um Licht von mindestens einer der Lichtquellen zu einem Probenort und vom Probenort zu dem Detektor zu übertragen.

Die Druckschrift US 2003/030850 A1 beschreibt eine Vorrichtung zur Ermittlung optischer Eigenschaften von Proben gemäß dem Oberbegriff des Anspruchs 1.

Die Druckschrift DE 20 2008 009859 U1 beschreibt die Anordnung eines Spiegels zur Umlenkung von Anregungslicht einer Lichtquelle auf eine Probe, wobei der Spiegel auf der optischen Achse eines Parabolspiegels angeordnet ist, der zur Sammlung von Emissionslicht der Probe dient.

### AUFGABE UND LÖSUNG

Vor diesem Hintergrund ist es eine Aufgabe der Erfindung, eine gattungsgemäße Vorrichtung zur Ermittlung optischer Eigenschaften von Proben bereit zu stellen, die eine kompakte Bauform hat und einen schnellen und robusten Wechsel zwischen Anregungslicht mit unterschiedlichen Eigenschaften, insbesondere aus unterschiedlichen Wellenlängenbereichen ermöglicht.

Zur Lösung dieser Aufgabe stellt die Erfindung eine Vorrichtung mit den Merkmalen von Anspruch 1 bereit. Vorteilhafte Weiterbildungen sind in den abhängigen Ansprüchen angegeben.

Die Vorrichtung ist zur Ermittlung optischer Eigenschaften von Proben vorgesehen, die in einer Matrixanordnung in Näpfchen einer Mikrotiterplatte angeordnet sind. Die Vorrichtung sollte also als Bestandteil eines Mikroplatten-Lesegeräts verwendbar sein. Die Vorrichtung umfasst eine Lichtquellenanordnung, die mindestens zwei durch eine Steuereinrichtung ansteuerbare Lichtquellen aufweist. Die Lichtquellen sind mit Abstand zueinander angeordnet.

Die Lichtquellen sind zur Abstrahlung von Licht mit unterschiedlichen Eigenschaften ausgebildet, also zur Abstrahlung unterschiedlicher Lichtarten. Beispielsweise können die Lichtquellen zur Abstrahlung von Licht aus unterschiedlichen Wellenlängenbereichen ausgebildet sein, so dass eine der Lichtquellen in einem ersten Wellenlängenbereich abstrahlen kann, während eine andere Lichtquelle in einem davon unterschiedlichen anderen Wellenlängenbereich abstrahlen kann. Die Wellenlängenbereiche können sich gegenseitig teilweise oder vollständig überlappen oder spektral separat voneinander liegen. Die spektrale Breite von Wellenlängenbereichen kann zwischen Lichtquellen unterschiedlich sein. Alternativ oder zusätzlich können andere Unterschiede der Lichtarten existieren. Beispielsweise kann wenigstens eine Lichtquelle polarisiertes und eine andere Lichtquelle unpolarisiertes oder auf andere Wiese polarisiertes Licht (z.B. mit anderer Polarisationsrichtung) abstrahlen. Es ist auch möglich, dass wenigstens eine der Lichtquellen zur Abstrahlung von pulsiertem Licht und eine andere Lichtquelle zur Abgabe von Dauerlicht konfiguriert ist.

Ein Anregungsstrahlengang der Vorrichtung hat Einrichtungen zur Übertragung von Licht der Lichtquellen als Anregungslicht von einer Lichteintrittsseite einer Probenebene in eine Messposition, in der eine in einem Näpfchen einer Mikrotiterplatte aufgenommene Probe angeordnet ist oder angeordnet werden kann. Die Messposition liegt in der Probenebene. Die Mikrotiterplatte ist vorzugsweise in der Probenebene oder in einer dazu parallel liegenden Ebene angeordnet und innerhalb dieser Ebene in zwei Dimensionen bewegbar, um sequenziell (also zeitlich nacheinander) unterschiedliche Proben in die Messposition bringen zu können.

Die Vorrichtung hat mindestens einen photosensitiven Detektor zur Umwandlung von einfallendem Licht in elektrische Signale, die einer Auswertung zugeführt werden können. Ein Detektionsstrahlengang dient zur Übertragung von durch die Probe beeinflusstem Licht von der Probe zu dem Detektor. In dem Detektionsstrahlengang können optische Elemente zur Strahlführung, Strahlformung oder andersartiger Strahlbeeinflussung des im Detektionsstrahlengang zum Detektor laufenden Lichts angeordnet sein.

Eine Einkoppeleinrichtung dient zum selektiven Einkoppeln von Licht mindestens einer ausgewählten Lichtquelle der Lichtquellenanordnung zur Einstrahlung in die Messposition.

Bei der Vorrichtung gemäß der beanspruchten Erfindung sind die Lichtquellen der Lichtquellenanordnung an unterschiedlichen Quellenorten stationär montiert. Die Einkoppeleinrichtung weist eine Koppeloptik auf, die an der Lichteintrittsseite der Probenebene angeordnet und als Strahlumlenkeinrichtung zur Umlenkung von Anregungslicht aus unterschiedlichen Einstrahlrichtungen in Richtung der Messposition derart ausgebildet ist, dass von der Koppeleinrichtung umgelenktes Anregungslicht von jeder der Lichtquellen von der Lichteintrittsseite in die Messposition einstrahlbar ist.

Die Koppeloptik erlaubt es somit, Anregungslicht, das von unterschiedlichen Einstrahlrichtungen kommen kann, so umzulenken, dass es unabhängig von der Einstrahlrichtung in die Messposition gelangen kann. Damit ist eine Einkopplung von Licht unterschiedlicher Eigenschaften aus unterschiedlichen Einstrahlrichtungen möglich. Das aus unterschiedlichen Einstrahlrichtungen kommende Licht kann z.B. unterschiedliche Wellenlängen bzw. unterschiedliche Wellenlängenbereiche aufweisen. Alternativ oder zusätzlich ist auch die Einkopplung von Licht mit unterschiedlichen sonstigen Eigenschaften, wie z.B. gepulstem Licht, Laserlicht mit hohem Kohärenzgrad und starker Kollimation, Licht mit definierter Schwingungsebene etc., möglich. Es ist möglich, dass unterschiedliche Arten von Lichtquellen genutzt werden, z.B. Halogenlampen, Xe-Flashlampen, LEDs oder Laser, letztere im cw (continuous wave) Betrieb, gepulst oder amplitudenmoduliert. Dadurch hat man alternativ oder zusätzlich zur Auswahl der Wellenlängen noch die Möglichkeit, andere Eigenschaften des Lichts zu variieren. Das ist mit nur einer Lichtquelle schwierig, ggf. kompromissbehaftet oder überhaupt nicht möglich.

Bei Nutzung dieses Konzepts sind in der Lichtquellenanordnung keine beweglichen Teile notwendig, um die Lichtquellen zu bewegen. Diese können an einem Rahmen der Vorrichtung fest montiert sein, so dass sich im Bereich der Lichtquellenanordnung ein einfacher und robuster Aufbau ergibt. Zum Wechsel zwischen unterschiedlichen Wellenlängenbereichen und/oder unterschiedlichen sonstigen Eigenschaften des Anregungslichts ist keine Bewegung von Lichtquellen nötig. Dies erlaubt ein einfaches und robustes Umschalten. Ein weiterer Vorteil der festen Anordnung liegt in der Robustheit des Aufbaus, der sich daraus ergebenden Wartungsfreiheit und der einfacheren Mechanik und Mechatronik und Software. Der Wegfall von Motoren für bewegliche Teile bringt verringerten konstruktiven Aufwand und Kostenvorteile, da jeder Motor programmiert werden muss, einen Referenzschalter benötigt und somit eine eigene Platine, die geprüft, installiert und verkabelt werden muss.

Es können genau zwei oder genau drei unterschiedliche und/oder unterschiedlich positionierte Lichtquellen vorgesehen sein, ggf. auch genau vier oder genau fünf, in manchen Fällen auch sechs oder mehr.

Erfindungsgemäß ist vorgesehen, dass die Koppeloptik an der Lichteintrittsseite der Probenebene innerhalb des Detektionsstrahlengangs angeordnet ist. Auf diese Weise können Messgeometrien realisiert werden, die z.B. bei Fluoreszenzproben bzw. Fluoreszenzmessungen üblich sind. Bei solchen Anordnungen wird das Anregungslicht von oberhalb der Probenebene in die Messposition eingestrahlt und das Emissionslicht an der Lichteintrittsseite des Anregungslichts von der Probenoberfläche kommend gesammelt und in Richtung des Detektors geleitet. Die Koppeloptik kann funktionaler Bestandteil einer Strahlseparationseinrichtung sein, wobei der Detektionsstrahlengang (bzw. Emissionsstrahlengang) um die Koppeloptik herum angeordnet sein kann. Hierdurch können besonders kompakte Anordnungen realisiert werden.

Erfindungsgemäß ist an der Lichteintrittsseite der Messposition ein Parabolspiegel zum Sammeln von Emissionslicht angeordnet und die Koppeloptik ist auf einer optischen Achse des Parabolspiegels angeordnet. Die Koppeloptik kann innerhalb des Parabolspiegels liegen oder außerhalb desselben. Bei einer Anordnung innerhalb des Parabolspiegels können besonders kompakte Bauformen realisiert werden. Eine Koppeloptik kann in der Regel derart klein dimensioniert sein, dass die Anordnung im Detektionsstrahlengang keine oder nur vernachlässig geringe Verluste der Lichtintensität z.B. durch Vignettierung verursacht.

Es ist möglich, dass zwischen der Koppeloptik und der Messposition noch ein oder mehrere optische Elemente liegen, beispielsweise mindestens eine Linse und/oder mindestens ein Spiegel. Vorzugsweise ist jedoch die Koppeloptik der Messposition unmittelbar vorgeschaltet, so dass sich zwischen der Koppeloptik und der Messposition kein strahlungsformendes optisches Element befindet, insbesondere keine Linse und kein Spiegel. Gegebenenfalls kann zwischen der Koppeloptik und der Messposition ein für das Anregungslicht und das Emissionslicht transparentes Schutzglas oder ein spektral selektives Filter vorgesehen sein. Bei manchen Ausführungsformen ist die Koppeloptik stationär montiert und weist keine beweglichen Teile auf. Hierdurch ist ein besonders unkomplizierter, wenig fehleranfälliger, robuster Aufbau möglich.

Um eine Selektion zwischen Anregungslicht unterschiedlicher Eigenschaften, z.B. unterschiedlicher Wellenlängenbereiche, bzw. unterschiedlicher Lichtquellen zu ermöglichen, können die Lichtquellen durch die Steuereinrichtung unabhängig voneinander einzeln ansteuerbar sein. Die Lichtquellen können beispielsweise einzeln ein- und ausschaltbar sein. Die Ansteuerung kann so erfolgen, dass jeweils zu einem gegebenen Zeitpunkt nur eine Lichtquelle eingeschaltet ist und entsprechend nur Licht dieser Lichtquelle als Anregungslicht eingekoppelt wird. Es ist gegebenenfalls auch möglich, zwei oder mehr Lichtquellen gleichzeitig einzuschalten, so dass Licht aus allen durch die eingeschalteten Lichtquellen bereit gestellten Wellenlängenbereichen und ggf. anderer Eigenschaften zur Anregung genutzt werden kann. Das Ein- und Ausschalten einer Lichtquelle kann durch Ein- und Ausschalten der elektrischen Energie zum Betreiben der Lichtquelle realisiert werden, gegebenenfalls aber auch durch Öffnen und Schließen eines nachgeschalteten Verschlusses bei kontinuierlich eingeschalteter Lichtquelle.

Für die konstruktive und funktionale Auslegung der Koppeloptik gibt es unterschiedliche Möglichkeiten.

In manchen Ausführungsformen ist die Koppeloptik als reflektive Koppeloptik ausgelegt. Die Koppeloptik kann beispielsweise ein statisches Spiegelsystem mit zwei oder mehr Spiegelflächenabschnitten unterschiedlicher Orientierung aufweisen, die derart in Bezug auf Einstrahlrichtungen von Anregungslicht unterschiedlicher Lichtquellen ausgerichtet sind, dass Anregungslicht unterschiedlicher Lichtquellen mittels zugeordneter Spiegelflächenabschnitte auf einen gemeinsamen Ort (nämlich die Messposition) durch Reflektion umlenkbar sind. Hierzu kann das Spiegelsystem einen Kegelspiegel (mit kontinuierlich gekrümmten Spiegelflächenabschnitten) oder einen Facettenspiegel (mit ebenen oder gekrümmten, z.B. fokussierenden Spiegelflächenabschnitten) aufweisen.

In Anordnungen, die nicht Gegenstand der vorliegenden Erfindung sind, ist es auch möglich, dass die Koppeloptik einen um eine Drehachse drehbar gelagerten Umlenkspiegel aufweist, der mittels eines Stellantriebs in unterschiedliche Reflexionsstellungen bewegbar ist, um die aus unterschiedlichen Einstrahlrichtungen eintreffende Strahlung des Anregungslichts wahlweise in die Messposition zu reflektieren. Der Umlenkspiegel kann so ausgelegt sein, dass das eintreffende Anregungslicht unabhängig von der Drehstellung des Umlenkspiegels immer entlang der gleichen Ausfallrichtung in Richtung Messposition umgelenkt wird. Diese Ausfallrichtung kann auch als Hauptachse des drehbar gelagerten Umlenkspiegels bezeichnet werden. Diese kann beispielsweise senkrecht zur Probenebene orientiert sein.

Es ist auch eine Mischung beider Anordnungen denkbar: Ein Facettenspiegel, der weniger Facetten aufweist, als Lichtquellen vorhanden sind. Durch Drehen des Facettenspiegels werden dann immer andere Kombinationen von Lichtquellen eingekoppelt.

Es ist auch möglich, dass die Koppeloptik als dispersive Koppeloptik mit mindestens einem dispersiven optischen Element ausgelegt ist, das in Bezug auf unterschiedliche Einstrahlrichtungen von Anregungslicht unterschiedlicher Lichtquellen derart ausgerichtet ist, dass von unterschiedlichen Einstrahlrichtungen einfallendes Anregungslicht aus unterschiedlichen Wellenlängenbereichen nach Wechselwirkung mit der dispersiven Koppeloptik im Wesentlichen in dieselbe Abstrahlrichtung abgestrahlt wird. Anders als übliche dispersive optische Elemente, die zur Zerlegung von multispektralem Eingangslicht in seine spektralen Bestandteile vorgesehen sind, wird ein dispersives Element in die dispersive Koppeloptik somit ""invers" betrieben. Für diese Varianten sollte das Anregungslicht vorzugsweise monoenergetisch oder zumindest sehr schmalbandig sein.

Die dispersive Koppeloptik kann beispielweise ein Gitter aufweisen, welches als ebenes Gitter (planares Gitter) oder als abbildendes Gitter (z.B. mit sphärisch oder zylindrisch gekrümmter Gitterfläche) ausgelegt sein kann. Es kann sich um ein transmissives Gitter oder um reflektives Gitter handeln.

Es ist auch möglich, dass die dispersive Koppeloptik ein Prisma aufweist, also ein dispersives optisches Element, welches mittels Brechung (Refraktion) von Licht an geeignet zueinander orientierten Prismenflächen funktioniert.

Erfindungsgemäß weist eine dispersive Koppeloptik ein Gitter oder ein Prisma auf.

Es können unterschiedliche Arten von Lichtquellen verwendet werden. Für die meisten Anwendungsfälle ist es günstig, wenn die Lichtquellen schmalbandige Lichtquellen sind, so dass die Wellenlängenbereiche der Lichtquellen relativ eng sind. Die spektrale Bandbreite der schmalbandigen Lichtquellen kann beispielsweise im Bereich von weniger als 20 nm nm liegen. Bei den Lichtquellen kann es sich insbesondere um Laser-Lichtquellen handeln. Bei Verwendung von Lasern als Lichtquellen kann die Koppeloptik besonders kleine Abmessungen haben, so dass bei einer in einem Detektionsstrahlengang angeordneten Koppeloptik nur wenig Vignettierung des Detektionsstrahlengangs auftritt. Alternativ zur Laser-Lichtquellen können Laserdioden oder lichtemittierende Dioden (LEDs) verwendet werden. Weiterhin können spektral gefilterte Weißlichtquellen (Halogen, Xe-Flash, etc.) verwendet werden.

Die Wellenlängen bzw. die Wellenlängenbereiche der Lichtquellen können beispielsweise so ausgebildet sein, dass deren Wellenlängen die wichtigsten am meisten gebräuchlichen Fluorophore anregen können. Beispielweise können Wellenlängenbereiche bei den Wellenlängen 405nm, 440nm, 475nm, 490nm, 515nm, 535nm, 630nm, 650nm und/oder 740nm genutzt werden.

Für die meisten Anwendungen kann es günstig sein, wenn die Lichtquellen der Lichtquellenanordnung als ebene Anordnung derart montiert sind, dass optische Achsen der Lichtquellen in einer gemeinsamen Ebene liegen und auf einen gemeinsamen in der Ebene liegenden Zentralpunkt gerichtet sind. Die Einstrahlrichtungen zum Zentralpunkt sind somit fächerartig zueinander ausgerichtet. Auch eine Anordnung, bei der die Einstrahlrichtungen auf einer gemeinsamen Kegelmantelfläche liegen, ist möglich.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig. 1: zeigt schematisch eine Vorrichtung zur Ermittlung optischer Eigenschaften von Proben mittels Fluoreszenzspektroskopie und anderen optischen Untersuchungsmethoden gemäß einer Ausführungsform der Erfindung bei einer Fluoreszenzmessung von oben;
- Fig. 2: zeigt eine Ausführungsform mit Parabolspiegel zur Sammlung des Emissionslichts und einem Facettenspiegel zur Einkopplung des Anregungslichtes, wobei der Facettenspiegel innerhalb des Parabolspiegels angeordnet ist;
- Fig. 3: zeigt die Ausführungsform von Fig. 2 senkrecht von oben (unten) betrachtet;
- Fig. 4: zeigt die Ausführungsform von Fig. 2 mit zusätzlichen strahlformenden und wellenlängenselektiven optischen Elementen im Emissionsstrahlengang;
- Fig. 5: zeigt eine Ausführungsform mit einem dispersiven Gitter-Element zur Einkopplung des Anregungslichts verschiedener Wellenlängen;
- Fig. 6: zeigt eine weitere Ausführungsform mit einem dispersiven Element, wobei das dispersive Element als Prisma ausgeführt ist; und
- Fig. 7A, 7B, 7C: zeigen Ansichten von nicht erfindungsgemäßen Beispielen mit einem beweglichen Umlenkspiegel.

### DETAILLIERTE BESCHREIBUNG DER AUSFÜHRUNGSBEISPIELE

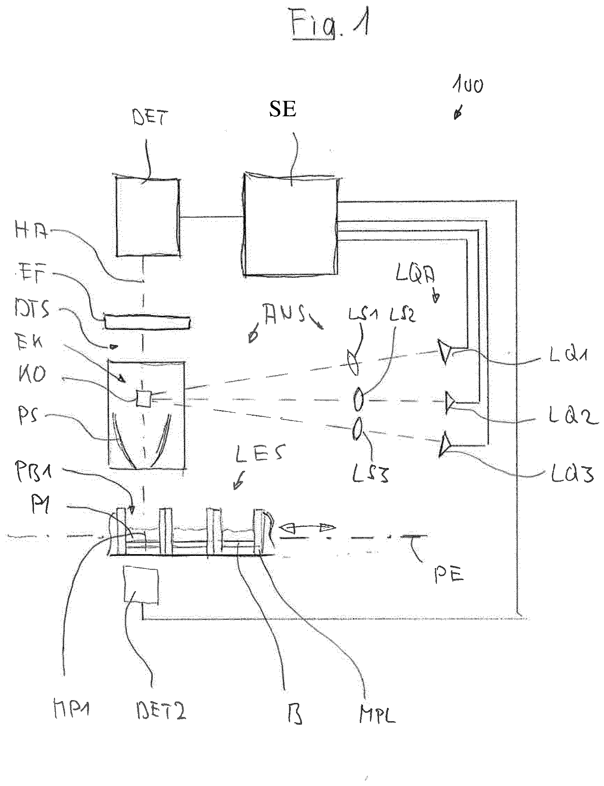

In Fig. 1 ist schematisch eine Vorrichtung 100 zur Ermittlung optischer Eigenschaften von Proben mittels Fluoreszenzspektroskopie und anderen optischen Untersuchungsmethoden (Lumineszenzmessung, Absorptionsmessung etc.) gezeigt. Die Vorrichtung kann in mehreren unterschiedlichen Betriebsmodi für unterschiedliche Messverfahren betrieben werden. Fig. 1 zeigt die Vorrichtung in einer Konfiguration, bei der die optischen und anderen Komponenten so eingestellt sind, dass in einem ersten Betriebsmodus eine Fluoreszenzmessung von oben ("Top-Messung") durchgeführt werden kann.

In der Beschreibung werden relative Positionen optischer Elemente mit Präpositionen wie "zwischen", "vor", "hinter" oder dergleichen beschrieben. Diese Präpositionen beziehen sich auf Positionen entlang eines optischen Pfads zwischen einer Lichtquelle über eine Messposition bis zu einem Detektor.

Die zu messenden Proben werden in Probenbehälter gefüllt, die im Beispielsfall durch Vertiefungen bzw. Näpfchen in einer Mikrotiterplatte bzw. Mikroplatte MPL ausgebildet sind, welche von einer nicht dargestellten Aufnahmeplatte aufgenommen wird, die motorisch horizontal zu einer Probenebene PE verfahren werden kann. Die dargestellten Probenbehälter haben jeweils einen für sichtbares Licht transparenten Boden B. Sie sind daher z.B. für Fluoreszenzmessung oder Lumineszenzmessungen von unten oder für Absorptionsmessungen geeignet. Für Fluoreszenzmessungen von oben und für Lumineszenzmessungen werden in der Regel Mikroplatten mit Probenbehältern mit nicht transparentem Boden verwendet. Die Mikroplatte ist im Beispielsfall so angeordnet, dass sich ein erster Probenbehälter PB1 mit einer darin befindlichen ersten Probe P1 in einer ersten Messposition MP1 befindet, in der eine Fluoreszenzmessung von oben durchgeführt werden kann. Eine vertikale optische Hauptachse HA der Vorrichtung verläuft senkrecht zur Probenebene PE durch die erste Messposition MP1.

Die Vorrichtung umfasst eine Lichtquellenanordnung LQA, die im Beispielsfall drei separate Lichtquellen LQ1, LQ2 und LQ3 aufweist. Die mit gegenseitigem Abstand angeordneten Lichtquellen sind an eine Steuereinrichtung SE der Vorrichtung angeschlossen und durch diese steuerbar. Jede der Lichtquellen ist zur Abstrahlung von Licht aus einem bestimmten Wellenlängenbereich ausgelegt, wobei sich die Wellenlängenbereiche der an unterschiedlichen Quellenorten angebrachten Lichtquellen spektral nicht überlappen. Bei anderen Ausführungsbeispielen können die Wellenlängenbereiche teilweise oder vollständig überlappen. Die Lichtquellen sind an ihren Quellenorten stationär montiert. Sie können in ihrer Quellenposition zwar geringfügig justiert werden, eine Verlagerung an einen anderen Quellenort, beispielsweise durch Verschieben, ist konstruktiv nicht vorgesehen.

Ein Anregungsstrahlengang ANS weist Einrichtungen zur Übertragung von Licht der Lichtquellen LQ1, LQ2 etc. als Anregungslicht in die in der Probenebene PE liegende Messposition MP1 auf. Diejenige Seite der Probenebene, von der das Anregungslicht eingestrahlt wird, wird hier als Lichteintrittsseite LES bezeichnet. In der dargestellten Messkonfiguration befindet sich in der Messposition MP1 die Probe P1, die im Probenbehälter PB1 bzw. dem Näpfchen PB1 der Mikroplatte MPL enthalten ist.

Ein Detektionsstrahlengang DTS führt von der Messposition MP1 zum Detektor DET und enthält Einrichtungen zum Übertragen von durch die Probe beeinflusstem Licht von der Probe zu dem Detektor. Der Detektor DET kann beispielsweise einen Photomultiplier aufweisen und ist an die Steuereinrichtung SE angeschlossen, die auch eine Auswerteeinheit zur Auswertung der vom Detektor erzeugten elektrischen Signale enthält.

Die Einrichtungen des Detektionsstrahlengangs DTS umfassen einen später noch erläuterten Parabolspiegel PS, eine später noch erläuterte Einkoppeleinrichtung EK mit einer Koppeloptik KO auf der Hauptachse HA der Vorrichtung und eine Emissionsfilteranordnung mit einem optional in den Detektionsstrahlengang einführbaren Emissionsfilter EF. Weitere Einrichtungen können vorgesehen sein.

Zu den optisch wirksamen Einrichtungen des Anregungsstrahlengangs ANS gehören beispielsweise Linsensysteme LS1, LS2, LS3, die in Fig. 1 nur schematisch dargestellt sind und die für jede der Lichtquellen LQ1, LQ2 etc. diejenige Einstrahlrichtung bestimmen, aus der das entsprechende Anregungslicht auf die Koppeloptik KO trifft.

Die an der Lichteintrittsseite LES der Probenebene PE angeordnete Koppeloptik KO fungiert als Strahlumlenkeinrichtung zur Umlenkung von Anregungslicht aus unterschiedlichen Einstrahlrichtungen in Richtung der Messposition MP1. Die Einstrahlrichtungen entsprechen denjenigen Richtungen, in denen das Licht der unterschiedlichen Lichtquellen LQ1, LQ2 etc. auf die Koppeloptik einfällt. Die Koppeloptik ist so ausgelegt, dass durch die Koppeloptik umgelenktes Anregungslicht von jeder der Lichtquellen von der Lichteintrittsseite in die Messposition MP1 eingestrahlt werden kann.

Die Koppeloptik KO und die Einkoppeleinrichtung EK haben somit eine Doppelfunktion. Zum einen wird eine Strahlumlenkung erreicht, so dass Anregungslicht senkrecht oder allgemein quer zur Hauptachse HA eingestrahlt werden kann und dann ausgehend von der Koppeloptik entlang der Hauptachse HA oder in spitzem Winkel dazu in die Messposition MP1 umgelenkt werden kann. Außerdem ermöglicht es die Koppeloptik KO, Anregungslicht, das aus unterschiedlichen Einstrahlrichtungen kommt, in Richtung der Messposition MP1 umzulenken.

Mit der Vorrichtung 100 können bei Bedarf auch Absorptionsmessungen durchgeführt werden. Hierzu kann das Licht über den Anregungsstrahlengang ANS von oben in die Probe P1 eingestrahlt werden. Das durch den transparenten Boden des Probenbehälters PB1 hindurchtretende Licht trifft nach Durchtritt durch die Probe auf einen weiteren Detektor DET2, der beispielsweise als Silizium-Fotodiode mit breitem Spektralbereich ausgelegt sein kann. Dessen Signale werden der Steuereinrichtung SE zugeführt.

Die Vorrichtung 100 eignet sich auch zur Messung von Lumineszenz-Emissionen, die chemisch, biologisch oder biochemisch erzeugt werden können. Hierfür können über (nicht dargestellte) Injektoren Startersubstanzen injiziert werden, die Lichtemissionen in einer Probe initiieren. Das emittierte Licht kann dann über den Parabolspiegel PS über den Detektionspfad DTS zum Detektor DET geführt werden.

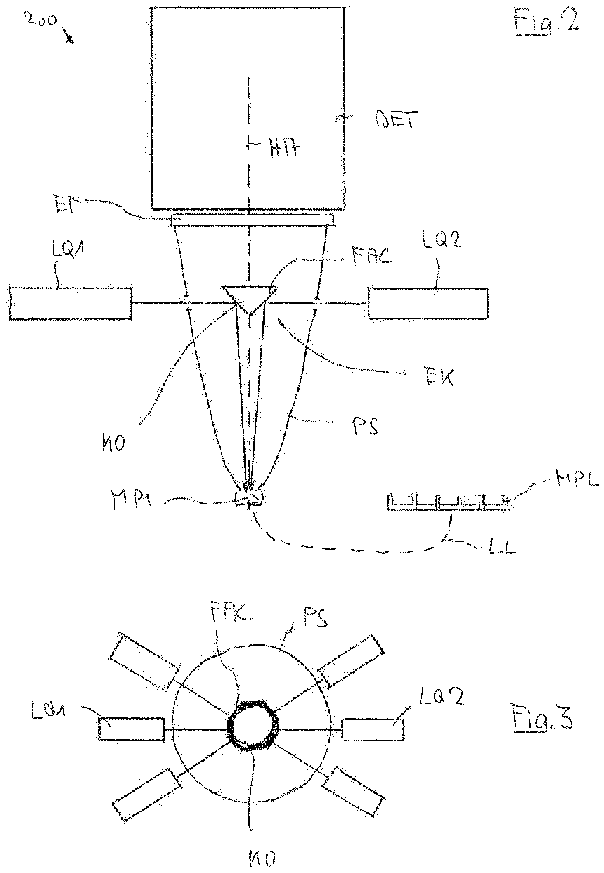

Die Fig. 2 zeigt schematisch einige Komponenten eines Ausführungsbeispiels einer Vorrichtung 200 zur Messung von Fluoreszenzlicht aus regelmäßig angeordneten Vertiefungen (Näpfchen) einer Mikroplatte. In der senkrechten Schnittdarstellung parallel zur optischen Hauptachse HA sind zwei einander diametral zur Hauptachse gegenüberliegende Lichtquellen LQ1, LQ2 erkennbar, deren Einstrahlrichtungen jeweils senkrecht zur Hauptachse HA bzw. in Horizontalrichtung orientiert sind. Die ortsfest montierten Lichtquellen können über die angeschlossene Steuereinrichtung separat voneinander ein- und ausgeschaltet werden. Sie strahlen im Beispielsfall in spektral separaten, unterschiedlichen Wellenlängenbereichen ab, was jedoch nicht zwingend ist.

Die von den Lichtquellen LQ1, LQ2 gemeinsam genutzte bzw. nutzbare Koppeloptik KO der Einkoppeleinrichtung EK ist senkrecht über der Messposition MP1 zentriert zur Hauptachse HA angeordnet. Die Koppeloptik liegt dabei innerhalb des vom Parabolspiegel PS umschlossenen Bereichs, also innerhalb des Parabolspiegels. Dieser hat auf Höhe der Koppeloptik seitliche Durchbrechungen zum Einstrahlen des von den jeweiligen Lichtquellen kommenden Lichts. Der nach oben geöffnete Parabolspiegel hat auf Seiten des Messobjekts eine Eintrittsöffnung, durch die hindurch das von der Probe emittierte Emissionslicht über einen gewissen Raumwinkel ins Innere des Parabolspiegels gelangt. Nach Reflektion an der parabolischen Spiegelfläche des Parabolspiegels ist die Strahlung mehr oder weniger kollimiert und verläuft weitgehend parallel zur Hauptachse HA durch einen Emissionsfilter EF, bevor es auf die sensitive Fläche des Detektors DET trifft.

Die Koppeloptik KO ist als reflektive Koppeloptik bzw. als Spiegelsystem ausgelegt in der Weise, dass für jede der Lichtquellen das entlang seiner Einstrahlrichtung verlaufende Licht an einer Spiegelfläche der Koppeloptik reflektiert und in ein- und demselben Fokuspunkt, nämlich der Messposition MP1 innerhalb eines Näpfchens, reflektiert wird. Die Koppeloptik wird im Beispielsfall durch einen Facettenspiegel gebildet, der mehrere ebene Spiegelfacettenabschnitte FAC hat, die jeweils als plane Umlenkspiegel für die einfallende Strahlung der zugeordneten Lichtquelle dienen. Das reflektierte Licht tritt nahezu parallel zur Hauptachse in die Messposition ein. Der in Fig. 2 zur Veranschaulichung vergrößert dargestellte spitze Winkel zwischen dem am Facettenspiegel reflektierten Strahlungsanteil und der Hauptachse kann dabei sehr klein gehalten werden (beispielsweise weniger als 10° oder weniger als 5°).

Bei den Lichtquellen LQ1, LQ2 handelt es sich vorzugsweise um lichtemittierende Dioden (LEDs) oder um Laser, deren Wellenlängen die wichtigsten, am meisten gebräuchlichen Fluorophore anregen können. Die Lichtquellen können mittels einer in der Steuereinheit aktiven Software ausgewählt werden. Die Auswahl kann so erfolgen, dass zu einem gegebenen Zeitpunkt nur eine der Lichtquellen eingeschaltet ist, so dass nur Licht aus dem entsprechenden Wellenlängenbereich zur Anregung genutzt wird. Zum Wechsel zwischen unterschiedlichen Wellenlängenbereichen kann eine Lichtquelle ausgeschaltet und die für die gewünschten Wellenlängenbereiche zuständige Lichtquelle eingeschaltet werden. Es können für spezielle Anwendungen auch zwei oder mehr Lichtquellen gleichzeitig genutzt werden.

Wie in Fig. 3 schematisch dargestellt ist, können die Lichtquellen LQ1, LQ2 etc. und deren optische Achsen rotationssymmetrisch zur Hauptachse HA um die Koppeloptik herum in einer gemeinsamen Ebene angeordnet sein, so dass nach Reflektion am Spiegel bzw. an der Koppeloptik alle optischen Achsen bzw. Strahlen unter dem gleichen Winkel nahezu senkrecht in das Näpfchen bzw. in die Messposition MP1 treffen. Die Koppeloptik kann eine kegelförmige Spiegelfläche aufweisen, so dass die Spiegelflächen an den Auftreffpunkten der eingestrahlten Lichtstrahlen konvex gekrümmt ist. An den Auftreffbereichen können auch konkave bzw. fokussierende Spiegelflächen oder ebene Spiegelflächen bzw. Facetten FAC ausgebildet sein.

Vorzugsweise sollten Lichtquellen genutzt werden, die für einen Pulsbetrieb genutzt werden können, um auch TRF (time resolved fluorescence) oder HTRF (homogeneous time resolved fluorescence) messen zu können. Bei Bedarf kann das Anregungslicht mittels eines Polarisationsfilters polarisiert werden. Soll polarisiertes Licht verwendet werden, kann als Alternative auch eine polarisiertes Licht abstrahlende Lichtquelle genutzt werden, beispielsweise ein Laser.

Für eine Bottom-Messung (Messung von unten) kann die Mikroplatte MP seitwärts verschoben werden, so dass ein unterhalb der Probenebene angeordneter Lichtleiter LL das Licht im Fokus aufnehmen und von unten zur Mikroplatte leiten kann. Das Emissionslicht kann durch einen gesonderten Lichtleiter für das Anregungslicht ringförmig mit einem eigenen LL zurückgeführt werden, ggf. auch durch denselben Lichtleiter, der auch das Anregungslicht leitet. Die Anordnung für eine Bottom-Messung ist in Fig. 2 zur Illustration mit gestrichelten Linien dargestellt. Bei dieser Anordnung würde sich dann an der ersten Messposition MP1 kein Probenbehälter befinden, sondern der Lichteintritt in den Lichtleiter für Anregungslicht.

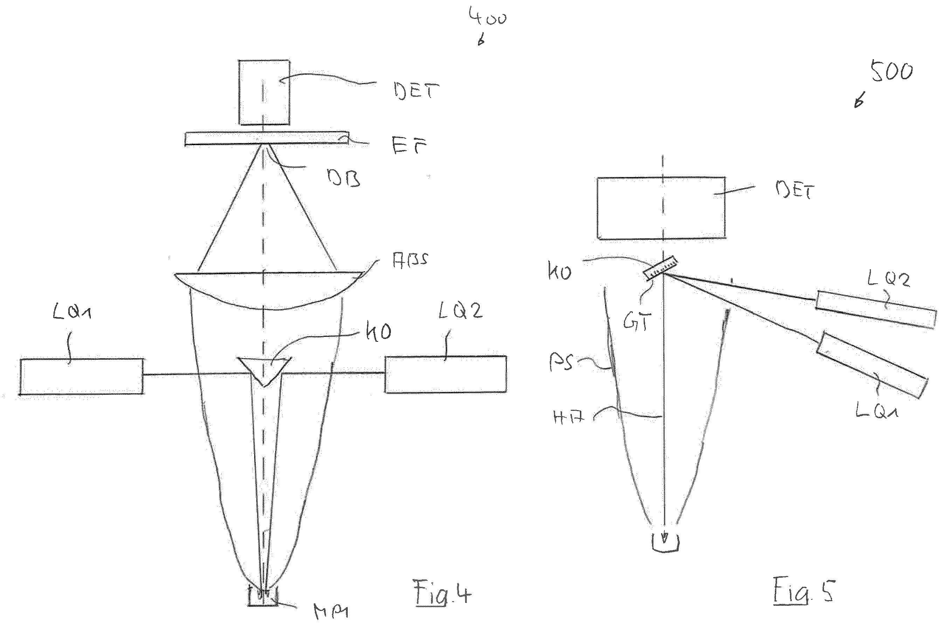

Die Variante der Vorrichtung 400 in Fig. 4 unterscheidet sich von der in Fig. 2 und 3 beschriebenen Variante im Wesentlichen dadurch, dass im Detektionsstrahlengang oberhalb der Koppeloptik KO ein optisches Abbildungssystem ABS angeordnet ist, welches das Emissionslicht auf einer relativ kleinen Fläche an der Eintrittsseite eines Emissionsfilters EF sammelt, welches einen oder mehrere linear variable Filter aufweist. Durch die Fokussierung des Emissionslichts auf einen relativ kleinen Durchstrahlungsbereich DB an dem linear variablen Filter ist eine besonders präzise Einstellung der spektralen Lage der transmittierten Wellenlänge möglich.

Fig. 5 zeigt eine schematische Darstellung von Komponenten einer Vorrichtung 500 gemäß einer anderen Ausführungsform. Bei der Ausführungsform hat die Einkoppeleinrichtung EK eine dispersive Koppeloptik KO in Form eines reflektiven Gitters GT, welches an fester Position auf der Hauptachse HA der Vorrichtung senkrecht oberhalb der Messposition MP1 zwischen dieser und dem Detektor DET im Detektionsstrahlengang angeordnet ist. Die Lichtquellenanordnung LQA hat im Beispielsfall zwei Lichtquellen LQ1, LQ2 in Form von Lasern unterschiedlicher Wellenlängenbereiche. Die Lichtquellen strahlen aus unterschiedlichen Einstrahlrichtungen Anregungslicht auf das Gitter bzw. die Koppeloptik KO ein. Die Einstrahlrichtungen und die Hauptachse liegen in einer gemeinsamen Ebene. Insbesondere wenn die Lichtquellen, wie im Beispielsfall, sehr schmalbandig bzw. quasi-monochromatisch sind, ist das Winkelspektrum des gebeugten, zur Messposition laufenden Anregungslichts so gering, dass im Wesentlichen das gesamte gebeugte Anregungslicht in die Probe gelangt..

Dieser Variante liegt folgende Erkenntnis zugrunde: Genauso wie ein Gitter aus einer Richtung eintreffendes weißes Licht in unterschiedliche Richtungen in seine Spektralfarben zerlegen (dispergieren) kann, kann ein Gitter auch genutzt werden, aus unterschiedlichen Einstrahlrichtungen eintreffendes Licht unterschiedlicher Wellenlängen an der Austrittsseite des Gitters auf eine gemeinsame Achse zu bringen. Dies wird im Beispielsfall genutzt. Die Orientierung des Gitters und die Einfallswinkel bzw. Einstrahlrichtungen der Laser werden gemäß der Gittergleichung relativ zueinander fix eingestellt. Nach einer Justage müssen weder die Lichtquellen noch das Gitter bewegt werden, um Anregungslicht unterschiedlicher Wellenlängenbereiche wahlweise in die Messposition MP1 einstrahlen zu können. Die Lichtquellen LQ1, LQ2 sind wie bei den anderen Ausführungsbeispielen an ihren Quellenorten fest installliert, an die Steuereinrichtung SE angeschlossen und können separat voneinander ein- und ausgeschaltet werden. Die Wellenlängenauswahl erfolgt über gesteuertes Ein- und Ausschalten der entsprechenden Laser.

Insbesondere bei der Verwendung von Lasern als Lichtquellen kann das Gitter der Koppeloptik KO sehr klein sein und vignettiert dadurch kaum das durch den Parabolspiegel PS aufgefangene Emissionslicht. Die optischen Achsen der Laser und die gemeinsame Achse der Anregung (hier die Hauptachse) bilden eine Ebene. Die Einstrahlung kann hier für alle unterschiedlichen Wellenlängenbereiche / Lichtquellen senkrecht zur Probenebene in die Vertiefungen der Mikroplatte geführt werden. Dies kann vorteilhaft sein insbesondere bei Verwendung von Mikroplatten mit hoher Topfanzahl, beispielsweise mit 384er- oder 1536er-Mikroplatten.

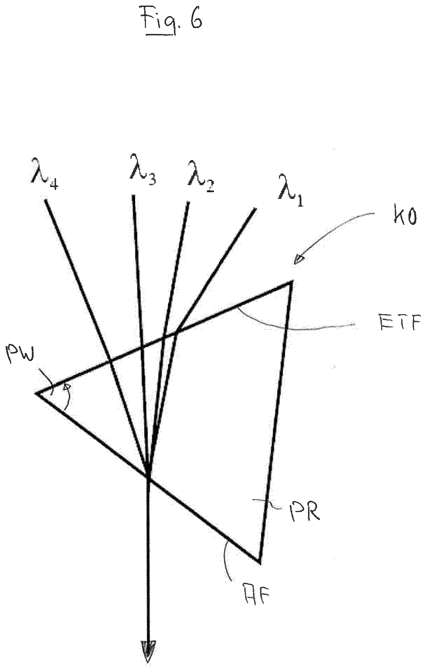

In Fig. 6 ist schematisch eine andere Ausführungsform einer Koppeloptik KO der Einkoppeleinrichtung gezeigt. Die Koppeloptik wird im Wesentlichen durch ein Prisma PR mit ebenen Prismenflächen gebildet. Der Prismenwinkel PW und der Brechungsindex des für das Prisma verwendeten transparenten Materials sind so gewählt, dass bei Einstrahlung von Anregungslicht unterschiedlicher Wellenlängen λ₁, λ₂, λ₃, λ₄ aus unterschiedlichen, in einer gemeinsamen Ebene liegenden Einstrahlrichtungen das Licht nach Brechung an der Eintrittsfläche und der Austrittsfläche AF an der gleichen Stelle in die gleiche Austrittsrichtung austritt. Das Prisma ist eine refraktive, dispersive Koppeloptik. Das Prisma kann an geeigneter Stelle fest in der Vorrichtung eingebaut sein. Zwischen dem Prisma und der Messposition können ein oder mehrere ebene Umlenkspiegel zur Faltung des Anregungsstrahlengangs angeordnet sein, z.B. um eine Einstrahlung von oben in die Messposition zu erreichen. Auch auf der Einstrahlungsseite (zwischen Lichtquelle und Prisma können z.B. aus Bauraumgründen Umlenkspiegel vorgesehen sein.

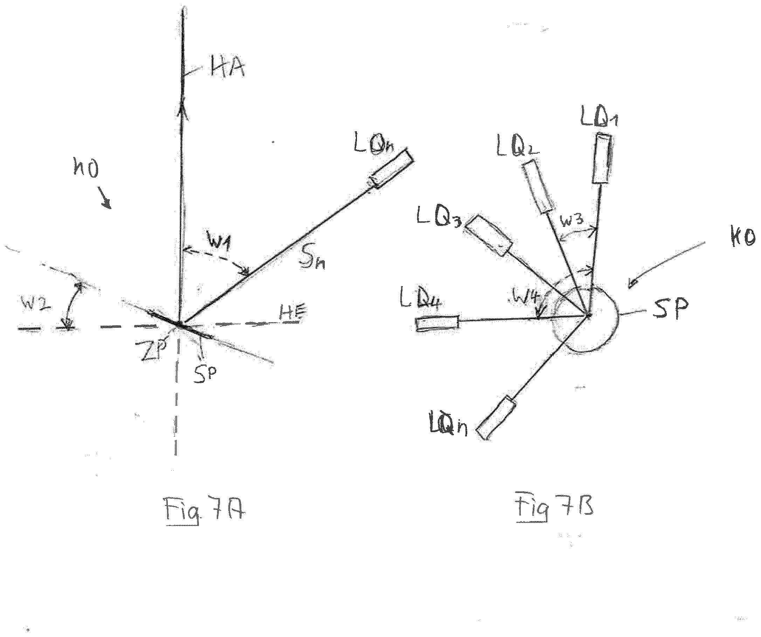

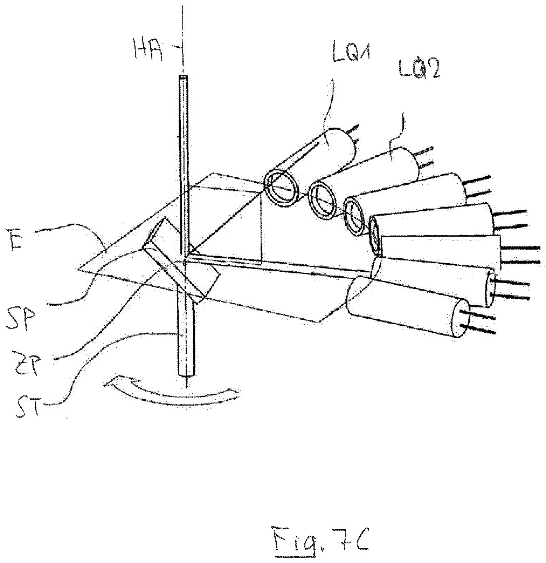

Anhand der Fig. 7A, 7B und 7C werden Merkmale und Komponenten eines nicht erfindungsgemäßen Beispiels beschrieben, bei dem die Koppeloptik KO einen um eine Drehachse drehbar gelagerten Umlenkspiegel SP aufweist, der mittels eines Stellantriebs in unterschiedliche Reflexionsstellungen gedreht werden kann, um auf diese Weise Anregungslicht, welches aus unterschiedlichen Einstrahlrichtungen von unterschiedlichen Lichtquellen kommend auf den Umlenkspiegel trifft, wahlweise (gewählt durch die Drehstellung des Umlenkspiegels) in die Messposition zu reflektieren.

Zur Veranschaulichung einiger Begriffe ist in Fig. 7A eine Seitenansicht und in Fig. 7B eine Draufsicht auf eine mögliche Anordnung von Lichtquellen LQ1, LQ2 etc. und Umlenkspiegel SP gezeigt. Fig. 7C zeigt eine isometrische Ansicht eines konkreten Aufbaus mit mehreren Lichtquellen und einem drehbaren Umlenkspiegel.

Für die Veranschaulichung der geometrischen Verhältnisse werde eine gerade Linie als Hauptachse HA definiert. Ein Punkt auf der Hauptachse HA definiert einen Zentralpunkt ZP. Ein Lichtstrahl Sₙ kommt von einer Lichtquelle LQₙ und trifft auf den Zentralpunkt ZP. Der Winkel zwischen dieser Strahlrichtung und der Hauptachse heißt W1. Die Strahlrichtung Sₙ und die Hauptachse HA definieren eine Ebene (Zeichenebene von Fig. 7A). Senkrecht zu dieser Ebene steht ein ebener Umlenkspiegel SP (Flachspiegel SP), dessen reflektierende Oberfläche durch den Zentralpunkt ZP geht. Der Umlenkspiegel SP kann gedreht werden um eine Achse, welche durch den Zentralpunkt ZP verläuft und senkrecht zu der durch Sₙ und HA aufgespannten Ebene (Zeichenebene) steht. Senkrecht zur Hauptachse HA läuft eine Ebene HE (Hauptebene) durch den Zentralpunkt ZP. Die Drehung des Umlenkspiegels relativ zu dieser Hauptebene HE erfolgt um einen Winkel W2 gegenüber der Hauptebene HE. Der Zusammenhang zwischen den Winkeln W1 und W2 ist so, dass das Licht stets in die Hauptachse HA reflektiert wird, so dass die Bedingung W2=W1/2 gilt.

Wie in Fig. 7B zu erkennen ist, können unterschiedliche Lichtquellen LQ1, LQ2 etc. kreisförmig um die Hauptachse HA herum angeordnet sein. Als Bezugsrichtung für die Bestimmung von Winkeln kann die Einstrahlrichtung des Lichts von der Lichtquelle LQ1 dienen, so dass der Lichtstrahl dieser Lichtquelle LQ1 unter einem Winkel von W3=0° auf den Zentralpunkt ZP trifft. Für den Lichtstrahl der Lichtquelle LQ2 ergibt sich dann ein Winkel W3(LQ2) etc. Die Lichtstrahlen aller Lichtquellen LQ sollen auf den Zentralpunkt ZP treffen. Die Lichtstrahlen verlaufen in einer gemeinsamen Ebene (Zeichenebene von Fig. 7B)

Der Umlenkspiegel SP kann mittels eines Stellantriebs motorisch um die Hauptachse HA gedreht werden, wobei der Winkel W4 den Drehwinkel dieser Drehung (in Bezug auf die Einstrahlrichtung des Lichts der ersten Lichtquelle LQ1) angibt. Zur Einspeisung des Lichts von einer ausgewählten Lichtquelle LQ muss dieser Winkel W4 immer gleich dem zugehörigen Winkel W3 sein.

Gemäß einer anderen Beschreibungsweise können nicht erfindungsgemäße Beispiele wie folgt beschrieben werden.

Die Lichtquellen LQ sind so angeordnet, dass deren Zentralstrahlen alle auf einen in einer Ebene E liegenden Punkt, genannt Zentralpunkt ZP, gerichtet sind. Durch den Zentralpunkt ZP verlaufend und senkrecht zur genannten Ebene wird eine Linie als optische Hauptachse HA definiert. Die Einfallswinkel aller Zentralstrahlen in Bezug auf die Hauptachse sind identisch. Ein Spezialfall wäre, dass dieser Einfallswinkel null Grad bezüglich der Ebene und somit 90 Grad zur Hauptachse beträgt, dann liegen alle Zentralstrahlen in einer Ebene.

Durch den Zentralpunkt verläuft ein Spiegel SP, welcher um die Hauptachse HA rotiert werden kann und dessen Orientierung derart ist, dass das Licht von jeder der Lichtquellen bei entsprechender Orientierung in die Hauptachse HA gelenkt wird. Falls die Zentralstrahlen aller Quellen in einer Ebene liegen, würde der Neigungswinkel des Spiegels gegenüber der Hauptachse 45 Grad betragen.

Die Lichtquellen LQ können ringförmig um die Hauptachse HA angeordnet sein und dazu den vollen Bereich von 360 Grad ausnutzen. Die LQ können auch anders positioniert sein, wenn dies konstruktiv vorteilhaft ist. Entscheidend ist nur, dass der eventuell noch durch weitere Spiegel und/oder andere optische Bauelemente, wie auch Wellenlängen selektierende Komponenten, geleitete Lichtstrahl zuletzt in der beschriebenen Weise in einer Einstrahlrichtung auf den Zentralpunkt ZP zuläuft.

Ein Umschalten zwischen einzelnen Lichtquellen LQ, also die Auswahl der für eine Messung genutzten Lichtquelle, erfolgt dadurch, dass der Spiegel SP durch eine Rotation um die Hauptachse HA derart eingestellt wird, dass das Licht von der gewünschten bzw. ausgewählten Lichtquelle LQ in die Hauptachse HA und damit auf die Probe gelenkt wird.

Der in der Hauptachse HA verlaufende Lichtstrahl, genannt Hauptstrahl HS, wird durch die nachfolgenden Optik-Komponenten auf die Proben gelenkt, welche sich z. B. in Mikroplatten oder Einzelgefäßen befinden. Alternativ ist auch eine unmittelbare Umlenkung in die Messposition möglich, wobei zwischen der Umlenkspiegel und der Messposition keine Linse und/oder keine Spiegel angeordnet sind, allenfalls ein Schutzglas und/oder ein Filter.

Fig. 7C zeigt ein Beispiel für eine Implementierung: Die Zentralstrahlen aller Lichtquellen LQ1, LQ2 etc. laufen in einer Ebene E und treffen im Zentralpunkt ZP auf die Mitte eines planen Spiegels SP. Der Spiegel SP ist an demjenigen Ende, von dem aus das Licht im Hauptstrahl zur Probe gelenkt wird, unter einem Neigungswinkel von 45° (sowohl gegenüber dem Hauptstrahl als auch gegenüber der Ebene der Lichtstrahlen) an der Spitze eines Stiftes ST befestigt. Der Stift liegt in der Hauptachse HA und kann motorisch um die Hauptachse gedreht werden. Somit kann sich der Spiegel der jeweils gewünschten Lichtquelle zuwenden. Die optimale Einstellung des Spiegels für die jeweilige Lichtquelle wird gefunden, indem durch Variation des Drehwinkels derjenige Wert ermittelt wird, bei welchem das meiste Licht in die Hauptachse HA gelenkt wird. Dazu können vor und/oder nach der Probe angeordnete Lichtdetektoren dienen. Die Lichtquellen LQ1, LQ2 etc. können individuell ein- oder ausgeschaltet werden.

Eine entsprechende Anordnung kann zum Umlenken des Hauptstrahles HS in verschiedene Richtungen, z. B. für eine Top-Messung oder eine Bottom-Messung, benutzt werden. Hierzu kann der Hauptstrahl z.B. auf einen bezüglich der Hauptachse um 180 Grad gegenläufig orientierten zweiten Spiegel treffen, welcher ebenfalls um die Hauptachse rotiert werden kann. In diesem Fall hat die Koppeloptik der Einkoppeleinrichtung somit zwei drehbare Umlenkspiegel. Diese können gemeinsam oder voneinander unabhängig drehbar sein.

Diese hier erläuterten Anordnungen haben gegenüber anderen Lösungen, bei welchen Lichtquellen mechanisch verschoben werden, große Vorteile. Ein Wechsel der Lichtquellen kann viel schneller erfolgen, die Kosten sind wesentlich geringer und die Lichtquellen werden nicht durch schnelle Bewegungen in ihrer Qualität gefährdet.

Bei allen bisher beschriebenen Ausführungsbeispielen ist im Detektionsstrahlengang DTS ein gegebenenfalls wechselbarer Emissionsfilter oder ein linear variabler Transmissionsfilter vorgesehen. Dies ist jedoch nicht zwingend. Alternativ oder zusätzlich kann im Detektionsstrahlengang auch ein dispersiver Einfach-Monochromator und/oder ein dispersiver Doppel-Monochromator vorgesehen sein. Hier treten zwar im Vergleich zu einfachen Emissionsfiltern höhere Lichtverluste auf, die Anordnung wird jedoch hinsichtlich der Beeinflussung der zu detektierenden Strahlung flexibler. Im Übrigen ist man bei der Verwendung von Lasern als Lichtquellen aufgrund der hohen Energiedichte von Lasern gegebenenfalls nicht darauf angewiesen, die Proben im Absorptionsmaximum des Farbstoffs anzuregen, so dass auch Anregungswellenlängenbereiche genutzt werden können, deren Intensitätsmaximum nicht genau im Absorptionsmaximum des Farbstoffs liegt. Allerdings sollte auf der Emissionsseite die Filterung relativ gut zu dem verwendeten Chromophor passen. Anstelle von Bandpassfiltern als Emissionsfilter können auch Langpassfilter vorteilhaft sein. Es gibt auch Varianten, die ohne Filterung des Emissionslichts, also ohne Filter und/oder Monochromatoren im Detektionsstrahlengang arbeiten.

## Patentansprüche

1. Vorrichtung zur Ermittlung optischer Eigenschaften von Proben, die in einer Matrixanordnung in Näpfchen einer Mikrotiterplatte (MPL) angeordnet sind, umfassend:
eine Lichtquellenanordnung (LQA) mit mindestens zwei durch eine Steuereinrichtung (SE) ansteuerbaren Lichtquellen (LQ1, LQ2), die mit Abstand zueinander angeordnet und zur Abstrahlung von Licht mit unterschiedlichen Eigenschaften ausgebildet sind;
einem Anregungsstrahlengang (ANS) mit Einrichtungen zur Übertragung von Licht der Lichtquellen als Anregungslicht von einer Lichteintrittsseite in eine in einer Probenebene liegende Messposition (MP1), in der eine in einem Näpfchen (PB1) einer Mikrotiterplatte aufgenommene Probe (P1) angeordnet oder anordenbar ist;
einen photosensitiven Detektor (DET);
einen Detektionsstrahlengang (DTS) zur Übertragung von durch die Probe beeinflusstem Licht von der Probe zu dem Detektor (DET);
einer Einkoppeleinrichtung zum selektiven Einkoppeln von Licht mindestens einer ausgewählten Lichtquelle der Lichtquellenanordnung zur Einstrahlung in die Messposition (MP1), wobei
die Lichtquellen (LQ1, LQ2) der Lichtquellenanordnung an unterschiedlichen
Quellenorten stationär montiert sind, und wobei
an der Lichteintrittsseite (LES) der Probenebene (PE) ein Parabolspiegel (PS) zum Sammeln von Emissionslicht angeordnet ist,
**dadurch gekennzeichnet, dass**
die Einkoppeleinrichtung (EK) eine als Kegelspiegel, Facettenspiegel, Gitter oder Prisma ausgebildete Koppeloptik (KO) aufweist, die an der Lichteintrittsseite (LES) der Probenebene (PE) angeordnet und als Strahlumlenkeinrichtung zur Umlenkung von Anregungslicht aus unterschiedlichen Einstrahlrichtungen in Richtung der Messposition (MP1) derart ausgebildet ist, dass von der Koppeloptik (KO) umgelenktes Anregungslicht von jeder der Lichtquellen von der Lichteintrittsseite in die Messposition einstrahlbar ist,
wobei die Koppeloptik (KO) auf einer optischen Achse des Parabolspiegels angeordnet ist.

2. Vorrichtung nach Anspruch 1, **dadurch gekennzeichnet, dass** die Koppeloptik (KO) an der Lichteintrittsseite (LES) der Probenebene (PE) innerhalb des Detektionsstrahlengangs (DTS) angeordnet ist, wobei vorzugsweise der Detektionsstrahlengang (DTS) um die Koppeloptik (KO) herum angeordnet ist.

3. Vorrichtung nach einem der Ansprüche 1 oder 2, **dadurch gekennzeichnet, dass** die Koppeloptik (KO) der Messposition (MP1) unmittelbar vorgeschaltet ist, so dass sich zwischen der Koppeloptik (KO) und der Messposition (KO) kein strahlungsformendes optisches Element, insbesondere keine Linse und kein gekrümmter Spiegel, befindet.

4. Vorrichtung nach einem der vorhergehenden Ansprüche, **dadurch gekennzeichnet, dass** die Koppeloptik (KO) stationär montiert ist und keine beweglichen Teile aufweist.

5. Vorrichtung nach einem der vorhergehenden Ansprüche, **dadurch gekennzeichnet, dass** die Lichtquellen (LQ1, LQ2) durch die Steuereinrichtung (SE) unabhängig voneinander einzeln ansteuerbar sind.

6. Vorrichtung nach einem der vorhergehenden Ansprüche, **dadurch gekennzeichnet, dass** die als Kegelspiegel oder Facettenspiegel ausgebildete reflektive Koppeloptik (KO) ein statisches Spiegelsystem mit zwei oder mehr Spiegelflächenabschnitten unterschiedlicher Orientierung aufweist, die derart in Bezug auf Einstrahlrichtungen von Anregungslicht unterschiedlicher Lichtquellen (LQ1, LQ2) ausgerichtet sind, dass Anregungslicht unterschiedlicher Lichtquellen mittels zugeordneter Spiegelflächenabschnitte auf eine gemeinsame Messposition (MP1) durch Reflexion umlenkbar sind.

7. Vorrichtung nach einem der Ansprüche 1 bis 5, **dadurch gekennzeichnet, dass** die als Gitter (GT) oder Prisma (PR) ausgebildete Koppeloptik (KO) eine dispersive Koppeloptik mit mindestens einem dispersiven optischen Element in Form eines Gitters (GT) oder eines Prismas (PR) ausgelegt ist, das derart in Bezug auf unterschiedliche Einstrahlrichtungen von Anregungslicht unterschiedlicher Lichtquellen (LQ1, LQ2) ausgerichtet ist, dass von unterschiedlichen Einstrahlrichtungen einfallendes Anregungslicht aus unterschiedlichen Wellenlängenbereichen nach Wechselwirkung mit der dispersiven Koppeloptik im Wesentlichen in dieselbe Abstrahlrichtung abgestrahlt wird.

8. Vorrichtung nach einem der vorhergehenden Ansprüche, **dadurch gekennzeichnet, dass** die Lichtquellen (LQ1, LQ2) schmalbandige Lichtquellen sind, insbesondere ausgewählt aus der Gruppe mit Laser, Laser-Diode und Lichtemittierende Diode (LED)

9. Vorrichtung nach einem der vorhergehenden Ansprüche, **dadurch gekennzeichnet, dass** die Lichtquellen (LQ1, LQ2) der Lichtquellenanordnung als ebene Anordnung so montiert sind, dass optische Achsen der Lichtquellen (LQ1, LQ2) in einer gemeinsamen Ebene (E) liegen und auf einen gemeinsamen in der Ebene liegenden Zentralpunkt (ZP) gerichtet sind.

## Claims

1. Device for determining the optical properties of samples which are arranged in a matrix arrangement in wells of a microtiter plate (MPL), comprising:
a light source arrangement (LQA) having at least two light sources (LQ1, LQ2) controllable by a control device (SE), which light sources are disposed spaced from each other and configured for emission of light with different properties;
an excitation optical path (ANS) including devices for transmission of light of the light sources as an excitation light from a light inlet side to a measurement position (MP1) located in a sample plane, in which a sample (P1) received in a well (PB1) of a microtiter plate is arranged or arrangeable;
a photosensitive detector (DET);
a detector optical path (DTS) for transmission of light influenced by the sample from the sample to the detector (DET);
a coupling device for selective coupling of light of at least one selected light source of the light source arrangement for irradiation into the measurement position (MP1), wherein
the light sources (LQ1, LQ2) of the light source arrangement are mounted stationary on different source locations, and wherein
on the light inlet side (LES) of the sample plane (PE) a parabolic mirror (PS) for collecting emitted light is disposed,
**characterized in that**
the coupling device (EK) includes coupling optics (KO) embodied in a conical mirror, facetted mirror, grating or prism, which is disposed on the light inlet side (LES) of the sample plane (PE) and configured as a beam deflection device for deflecting of excitation light from different irradiation directions towards the measurement position (MP1) such that excitation light deflected by the coupling optics (KO) can be irradiated from each of the light sources from the light inlet side into the measurement position,
wherein the coupling optics (KO) are arranged on an optical axis of the parabolic mirror.

2. Device according to claim 1, **characterized in that** the coupling optics (KO) are arranged on a light inlet side (LES) of the sample plane (PE) within the detector optical path (DTS), wherein preferably the detector optical path (DTS) is disposed around the coupling optics (KO).

3. Device according to any of claims 1 or 2, **characterized in that** the coupling optics (KO) are immediately upstream of the measurement position (MP1) such that no beamforming optical element, in particular no lens and no curved mirror, is located between the coupling optics (KO) and the measurement position (MP1).

4. Device according to any of the preceding claims, **characterized in that** the coupling optics (KO) are mounted stationary and do not include movable parts.

5. Device according to any of the preceding claims, **characterized in that** the light sources (LQ1, LQ2) are controllable individually and independently of each other by the control device (SE).

6. Device according to any of the preceding claims, **characterized in that** the reflective coupling optics (KO) embodied in a conical mirror or facetted mirror have a static mirror system of two or more mirror surface sections in different orientations, which are oriented in relation to irradiation directions of excitation light of different light sources (LQ1, LQ2) such that excitation light of different light sources can be deflected to a common measurement position (MP1) by reflection using associated mirror surface sections.

7. Device according to any of claims 1 to 5, **characterized in that** the coupling optics (KO) embodied in a grating (GT) or prism (PR) is designed as dispersive coupling optics having at least one dispersive optical element in the form of a grating (GT) or a prism (PR) which is oriented in relation to different irradiation directions of excitation light of different light sources (LQ1, LQ2) such that light incident from different irradiation directions of different wavelength ranges is emitted essentially in the same radiation direction after interaction with the dispersive coupling optics.

8. Device according to any of the preceding claims, **characterized in that** the light sources (LQ1, LQ2) are narrowband light sources, in particular selected from the group of laser, laser diode, and light emitting diode (LED).

9. Device according to any of the preceding claims, **characterized in that** the light sources (LQ1, LQ2) of the light source arrangement are mounted as a planar arrangement such that optical axes of the light sources (LQ1, LQ2) are located in a common plane (E) and are directed to a common central point (ZP) located in the plane.

## Revendications

1. Appareil pour déterminer les propriétés optiques d'échantillons qui sont disposés en un arrangement en matrice dans les coupelles d'une plaque microtitre (MPL), comprenant :
un arrangement de sources de lumière (LQA) comprenant au moins deux sources de lumière (LQ1, LQ2) commandables par un dispositif de commande (SE), lesquelles sont disposées espacées les unes des autres et sont configurées pour émettre de la lumière ayant des propriétés différentes ;
une trajectoire de faisceau d'excitation (ANS) pourvue de dispositifs servant à la transmission de la lumière des sources de lumière en tant que lumière d'excitation depuis un côté d'entrée de lumière dans une position de mesure (MP1) qui se trouve dans un plan d'échantillon,
dans laquelle est disposé ou peut être disposé un échantillon (P1) accueilli dans une coupelle (PB1) d'une plaque microtitre ;
un détecteur photosensible (DET) ;
une trajectoire de faisceau de détection (DTS) servant à la transmission de la lumière influencée par l'échantillon de l'échantillon au détecteur (DET) ;
un dispositif d'injection destiné à l'injection sélective de la lumière d'au moins une source de lumière sélectionnée de l'arrangement de sources de lumière en vue de l'irradiation dans la position de mesure (MP1),
les sources de lumière (LQ1, LQ2) de l'arrangement de sources de lumière étant montées de manière fixe en différents emplacements de source, et
un miroir parabolique (PS) destiné à collecter la lumière d'émission étant disposé du côté d'entrée de lumière (LES) du plan d'échantillon (PE),
**caractérisé en ce que**
le dispositif d'injection (EK) possède une optique de couplage (KO) réalisée sous la forme d'un miroir conique, d'un miroir à facettes, d'un réseau ou d'un prisme, laquelle est disposée du côté d'entrée de lumière (LES) du plan d'échantillon (PE) et réalisée sous la forme d'un dispositif de déviation de faisceau destiné à dévier la lumière d'excitation provenant de différentes directions d'irradiation dans la direction de la position de mesure (MP1) de telle sorte que la lumière d'excitation de chaque source de lumière déviée par l'optique de couplage (KO) peut être irradiée depuis le côté d'entrée de lumière dans la position de mesure,
l'optique de couplage (KO) étant disposée sur un axe optique du miroir parabolique.

2. Appareil selon la revendication 1, **caractérisé en ce que** l'optique de couplage (KO) est disposée du côté d'entrée de lumière (LES) du plan d'échantillon (PE) à l'intérieur de la trajectoire de faisceau de détection (DTS), la trajectoire de faisceau de détection (DTS) étant de préférence disposée autour de l'optique de couplage (KO).

3. Appareil selon l'une des revendications 1 et 2, **caractérisé en ce que** l'optique de couplage (KO) est montée directement en amont de la position de mesure (MP1), de sorte qu'aucun élément optique de mise en forme du faisceau, notamment aucune lentille et aucun miroir courbe, ne se trouve entre l'optique de couplage (KO) et la position de mesure (KO).

4. Appareil selon l'une des revendications précédentes, **caractérisé en ce que** l'optique de couplage (KO) est montée de manière fixe et ne possède pas de parties mobiles.

5. Appareil selon l'une des revendications précédentes, **caractérisé en ce que** les sources de lumière (LQ1, LQ2) peuvent être commandées individuellement indépendamment l'une de l'autre par le dispositif de commande (SE).

6. Appareil selon l'une des revendications précédentes, **caractérisé en ce que** l'optique de couplage (KO) réfléchissante réalisée sous la forme d'un miroir conique ou d'un miroir à facettes possède un système de miroirs statique ayant deux portions de surface réfléchissante ou plus d'orientations différentes, lesquelles sont orientées par rapport aux directions d'irradiation de la lumière d'excitation de différentes sources de lumière (LQ1, LQ2) de telle sorte que la lumière d'excitation de différentes sources de lumière peut être déviée par réflexion sur une position de mesure commune (MP1) au moyen des portions de surface réfléchissante associées.

7. Appareil selon l'une des revendications 1 à 5, **caractérisé en ce que** l'optique de couplage (KO) réalisée sous la forme d'un réseau (GT) ou d'un prisme (PR) est conçue une optique de couplage dispersive ayant au moins un élément optique dispersif sous la forme d'un réseau (GT) ou d'un prisme (PR), lequel est orienté par rapport aux directions d'irradiation différentes de la lumière d'excitation de différentes sources de lumière (LQ1, LQ2) de telle sorte que la lumière d'excitation de différentes plages de longueurs d'onde incidente depuis des directions d'irradiation différentes est émise sensiblement dans la même direction d'émission après l'interaction avec l'optique de couplage dispersive.

8. Appareil selon l'une des revendications précédentes, **caractérisé en ce que** les sources de lumière (LQ1, LQ2) sont des sources de lumière à bande étroite, notamment choisies dans le groupe comprenant le laser, la diode laser et la diode électroluminescente (LED).

9. Appareil selon l'une des revendications précédentes, **caractérisé en ce que** les sources de lumière (LQ1, LQ2) de l'arrangement de sources de lumière sous la forme d'un arrangement plan sont montées de telle sorte que les axes optiques des sources de lumière (LQ1, LQ2) se trouvent dans un plan (E) commun et sont dirigés sur un point central (ZP) commun qui se trouve dans le plan.
